(19) Europäisches Patentamt

European Patent Office

Office européen des brevets

(11) **EP 2 636 689 A1**

(12) **EUROPEAN PATENT APPLICATION**

(43) Date of publication:
**11.09.2013 Bulletin 2013/37**

(51) Int Cl.:
**C08F 10/00** (2006.01)     **C08F 2/00** (2006.01)
**C08F 2/01** (2006.01)

(21) Application number: **12158417.1**

(22) Date of filing: **07.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Borealis AG**
**1220 Vienna (AT)**

(72) Inventors:
• **Hjertberg, Thomas**
  **45691 Kungshamn (SE)**

• **Sultan, Bernt-Ake**
  **44442 Stenungsund (SE)**
• **Bergqvist, Mattias**
  **41674 Göteborg (SE)**
• **Voigt, Björn**
  **42243 Hisings Backe (SE)**

(74) Representative: **Gross, Felix**
**Patentanwälte Maikowski & Ninnemann**
**Postfach 15 09 20**
**10671 Berlin (DE)**

(54)     **Process and plant for manufacturing polyethylene or ethylene based copolymers**

(57)     Embodiments of a process and a plant for manufacturing polyethylene and ethylene based copolymers in which

a) a compressor unit feed stream (10), comprising ethylene, is fed into a compressor unit (1) for increasing the pressure for a reactor (2) for radical polymerization of the ethylene,

b) a compressor unit output stream (11) of more than 1 t/h is fed into the reactor (2), and

c) wherein a gas purification unit (5) separates comonomers and / or chain transfer agents from a gaseous stream (15) downstream from the reactor (2).

FIG 1

EP 2 636 689 A1

**Description**

The invention relates to a process for manufacturing polyethylene or ethylene based copolymers with the features of claim 1 and a plant for manufacturing these polymers with the features of claim 18.

Polyethylene is the most frequently used commercial polymer. It was originally produced by free radical polymerization at high pressure and it continues to be a valued process with high commercial relevance for the preparation of low-density polyethylene (LDPE). LDPE is versatile polymers which can be used in a variety of applications e.g. film, coating, molding and wire and cable applications.

Later low-pressure polymerization processes for production of polyethylene by coordination polymerization by the use of e.g. chromium, Ziegler-Natta and metallocene catalysts were developed. These processes extended the property window of polyethylene by introduction of the stiffer high-density polyethylene (HDPE). Today the low-pressure processes cover a very broad flexibility range by the introduction of linear low-density polyethylene (LLDPE) as well as plastomers and elastomers.

The free radical polymerization process have, however, some unique features e.g. absence of catalyst residues, long chain branching formation and a possibility to produce a broad range of copolymers, e.g. acetates, acrylates, silanes, dienes, carboxylic acids, anhydrides as well as carbon monoxide and epoxy and amino functional olefins etc. The coordination polymerization processes are, however, commercially limited to produce ethylene copolymers with similar reactivity as ethylene i.e. $\alpha$-olefins which are commonly used for regulating the density.

A known set-up for a high-pressure polyethylene reactor consists essentially of a set of two compressors. The process comprises a primary and a high-pressure compressor, a preheater and a polymerization reactor, typically an autoclave or a tube, and two separators for separating the monomer-polymer mixture leaving the reactor. In the first separator, the high pressure separator, the ethylene is separated from the monomer-polymer mixture is recycled to the ethylene feed between the primary compressor and the high pressure compressor and the ethylene separated from the mixture in the second separator, the low pressure separator, is added to the stream of fresh ethylene before it is fed to the primary compressor. In the low pressure recycle line comonomers and chain transfer agent is added prior the high-pressure compressor. Both recycle lines are equipped with dewaxing units, i.e. comprising cold traps prior compression for extracting waxes from the gas flow. For starting the reactions initiators are added after the preheater and along the reactor for starting and maintaining the highly exothermic polymerization reaction.

This embodiments of the invention relate to free radical polymerization processes which are able to produce ethylene copolymers in a robust and safe way avoiding interactions between, ethylene, co-polymers, chain transfer agents and lubricants in critical process steps such as compressors and preheater(s) observed in traditional polyethylene high pressure reactors. The consequences of such interactions are an increased risk for plant shut downs, safety incidents, reduced production flexibility and increased cost due to increased wearing of critical hardware, and reduced production output.

The embodiments do also significantly reduce the product transfer time between homo and copolymer production as well as between production of different copolymers.

The embodiments of the invention is exemplary described, wherein

Fig. 1 schematically shows a first embodiment of a process for manufacturing LDPE with a compression unit, a reactor and a gas purification unit;

Fig. 2 schematically shows a second embodiment of the process for manufacturing LDPE with a compression unit, a reactor and a gas purification unit downstream from a dewaxing unit;

Fig. 3 schematically shows a third embodiment of a process for manufacturing LDPE with a compression unit, a reactor and a gas purification unit comprising a distillation process;

Fig. 4 schematically shows a fourth embodiment of a process for manufacturing LDPE with a compression unit, a reactor and a gas purification unit another distillation process;

Fig. 5 schematically shows a fifth embodiment, being a variation of the fourth embodiment;

Fig. 6 schematically shows a sixth embodiment of a process for manufacturing LDPE with a compression unit, a reactor and a gas purification unit;

Fig. 7 schematically shows a seventh embodiment being a variation of first embodiment with a preheater unit of a process for manufacturing LDPE;

Fig. 8 schematically shows a eighth embodiment of the process with a multistage compressor unit;

Fig. 9 schematically show a ninth embodiment of the process, being a variation of the ninth embodiment;

Fig. 10 schematically shows an embodiment of a preheater;

Fig. 11 showing plant data related to a performance loss in a preheater unit;

Fig. 12A, B, C showing different embodiments for the feed stream of a reactor.

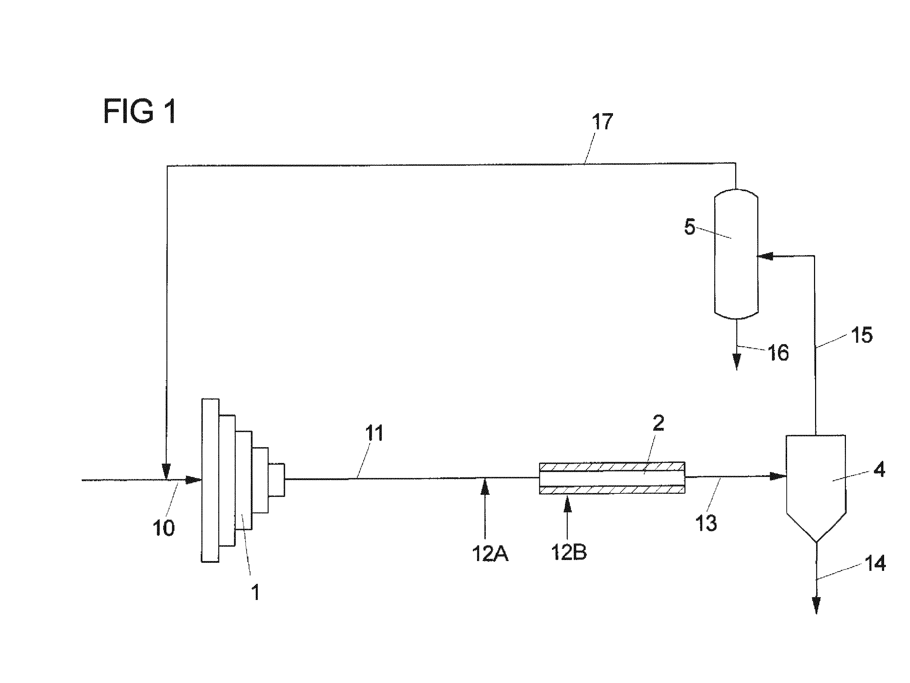

The embodiment shown in Fig. 1 comprises a compressor unit 1 having a compressor unit feed steam 10 as an input stream. As will be shown later, this compressor unit feed stream 10 combines at least two different streams, both predominantly comprising ethylene.

In typical embodiments, the feed stream 10 contains ethylene, with 0,01-20 weight-% chain transfer agents (CTA) and between 0,01 to 50 weight-% co-monomer, the exact composition depending on the activity of the chosen CTA. Examples of co-monomers and CTA are given below.

The compressor unit 1 brings the educts to the pressure required in a reactor 2 in which the free radical polymerization of the ethylene takes place. Typically the pressure at the entry of the reactor 2 is between 500 and 3500 bar. As will be described further below, the compressor unit 1 can comprise two or more stages.

This LDPE manufacturing process relates to reactor input flow rates of more than 1t/h, i.e. industrial plants. Industrial scale processes and plants underlie particularly stringent economic parameters so that solutions, e.g. known from small scale processes or lab processes cannot easily be scaled-up for industrial processes. The reactor 2 can be used to manufacture polyethylene or ethylene based copolymers.

In this embodiment the reactor 2 is a tubular reactor having a number of reaction zones (not shown in Fig. 1). In alternative embodiments the reactor 2 can be also an autoclave reactor (e.g. a continuous stirred tank reactor).

In the tubular reactor 2 the highly exothermic polymerization reaction is carried out under supercritical conditions, e.g. between 1000 and 3500 bar, preferably between 1800 and 3400 bar, and especially preferred between 2000 and 3300 bar.

To remove the reaction heat, the tubular reactor 2 comprises at least one cooling jacket. Typically the tubular reactor 2 tubes have a length between 500 and 4000 m, preferably between 1500 and 3000 m, more preferably between 2000 and 2500 m. The operating temperature in the reactor 2 varies between 100 and 350 °C, the temperature forming a profile along the length of the reactor 2. In particular the temperature is between 165 and 340 °C, more particularly between 165 and 320 °C.

The feed temperature of the reactor 2 is typically in the range between 165 and 200 °C. The diameter of the tubular reactor 2 tubes can be between 30 to 200 mm, preferably between 60 and 90 mm.

In case that an embodiment with an autoclave reactor 2 is used, the operating conditions are slightly different from the embodiment with a tubular reactor 2.

The autoclave reactor 2 is operating above critical pressure, in particular between 500 and 3000 bar, specifically between 1000 and 2500 bar, more specifically between 1200 and 2000 bar. For the autoclave reactor 2 operating at temperatures is between 100 and 340 °C.

To enhance the process, at least one reactive feed stream 12A, 12B comprising at least one co-monomer is pumped into the process downstream from the compressor unit 1. The reactive feed stream 12A, 12B is essentially free of ethylene. In the following the embodiments of the plant and process refer to liquid reactive feed streams. In other embodiments it is possible to introduce at least one gaseous reactive feed stream 12A, 12B by using compressors to inject the gaseous reactive feed stream 12A, 12B into the reactor 2.

In the embodiment shown in Fig. 1 one reactive feed stream 12A is pumped into the line leading towards the reactor 2, the other reactive feed stream 12B is pumped into a first reaction zone of the reactor 2. The composition and / or flow rates of the reactive feed streams 12A, 12B can be identical or different. In the shown embodiment all co-monomers are pumped into the process downstream from the compressor unit 1.

The high pressure pumps necessary for the introduction of liquid reactive feed streams 12A, 12B or compressor (s) for gaseous reactive feed streams 12A, 12B are not shown in Fig. 1.

Typical comonomers are octadiene (OD), vinyl acetate (EVA), meth acrylates, in particular methyl acrylate (EMA), ethyl acrylate (EEA), butyl acrylate (EBA), methyl methacrylate (EMMA), acrylic acid (EAA), methacrylic acid (EMAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and / or gamma-metha acryloxy propyl tri ethoxy silane.

In a further embodiment it is possible, that the reactive feed stream comprise chain transfer agents or chain transfer agents and co-monomers.

Typical chain transfer agents are propionaldehyde (PA), propylene, propane, methyl ethyl ketone and isopropanol and / or hydrogen.

The reactor output stream 13 is usually throttled to a pressure between 100 and 300 bar, preferably 220 to 270 bar.

In a separation unit 4 the reactor output stream 13 is separated into a polymer product stream 14 and a gaseous ethylene rich stream 15. The polymer product stream 14 can be further processed e.g. into granulate.

The gaseous ethylene rich stream 15 can further comprise oligomers, additives, solvents, chain transfer agents and / or co-monomers.

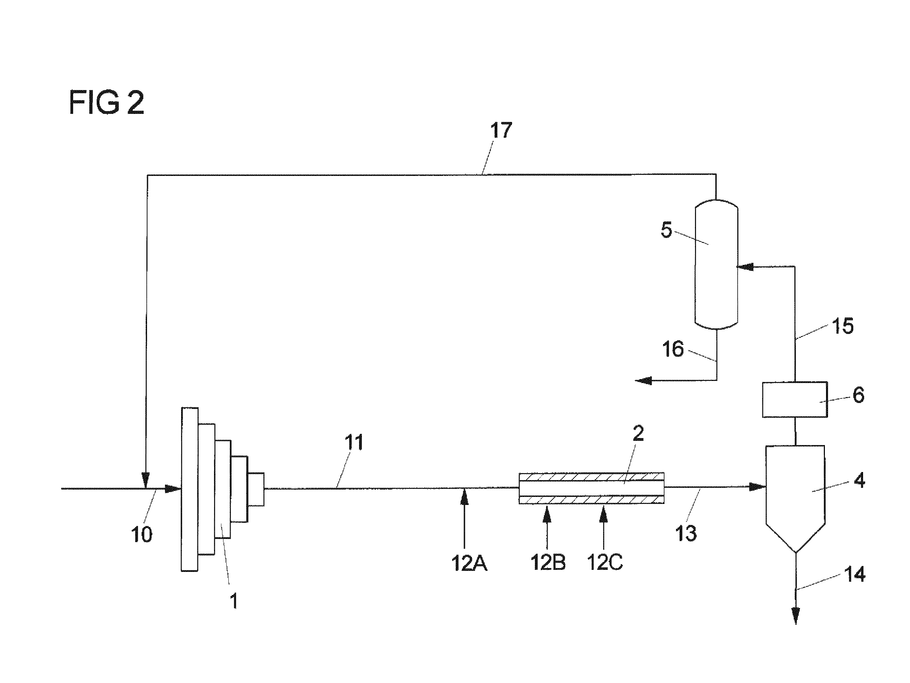

In the embodiment shown in Fig. 1, a gas purification unit 5 is used for the gaseous product stream 15 which in this case not only comprises ethylene, but also chain transfer agents and co-monomers. The gas purification unit 5 separates the chain transfer agents and / or co-monomers into an ethylene poor output stream 16 out of the gaseous stream. Different embodiments of the gas purification unit 5 are described in Fig. 2, 3 and 4.

The purified ethylene is recycled 17 back to the compressor unit 1 where it is mixed with fresh ethylene. As can be seen in Fig. 1, the gas purification unit 5 is located downstream from the reactor 2. The liquid reactive feed streams 12A, 12B are pumped into the process downstream from the compressor unit 1, but upstream from the separation unit 4. This terminology applies to all embodiments.

The purification of the gaseous products of the reactor 2 results in the elimination of chain transfer agents and / or copolymers which could otherwise be harmful to the compressor unit 1 or other units upstream from the reactor 2 (e.g. a preheater as will be described below) due to their reactivity. If those reactive compounds reach e.g. the compressor unit 1, there is an increased risk of plant shutdowns, safety incidents, performance loss, reduced production flexibility, and increased wear of mechanical parts.

The introduction of at least one reactive feed stream 12A, 12B downstream from the compressor unit 1 in combination with the gas purification unit 5 ensure that the compressor unit 1 and also the preheater (and as later will be shown, other units) are protected from unwanted, reactive substances. Using a plurality of introduction points for the reactive feed streams 12A, 12B allows for an improved flexibility to control the temperature and concentrations within the reactor 2.

Accordingly only ethylene will be transferred to the most sensitive processing equipment, e.g. the primary compressor unit 1.

Unwanted reactions caused by the more reactive (compared to ethylene) co-monomers and / or chain transfer agents outside the reactor are avoided. This reduces the risk for plant shut down, increases the operability and reduces the wearing of the most critical process parts. Furthermore, the risk for safety incidents is reduced. Also the product transfer times are shorter. And no purge gas compressors or purge gas purification is required.

It should be noted that Fig. 1 is very schematic representation of an embodiment of the process. Further details, like e.g. the placement of a dewaxing unit 6 will be shown in connection with further embodiments.

In Fig. 2 a variation of the first embodiment is shown. The process flow sheet is basically identical to the one of the first embodiment so that reference can be made to the description above.

In this second embodiment the gas purification 5 is downstream of a dewaxing unit 6 so that the gas separation unit output stream 15 being rich in ethylene is dewaxed before entering the gas-purification unit 5 and recycled back to the compressor unit 1.

The dewaxing unit 6 comprises a series of wax removers in which the ethylene is successively cooled down prior passing the actual wax remover, also being a part of the dewaxing unit 6.

If the recycled and dewaxed ethylene is present at different pressurelevels, e.g. a high pressure recycle and a low pressure recycle, the streams can be fed into a respective high pressure compression unit (e.g. a hyper compressor) and low pressure compression unit (e.g. the primary compressor) as is shown in Fig. -9 and 10..

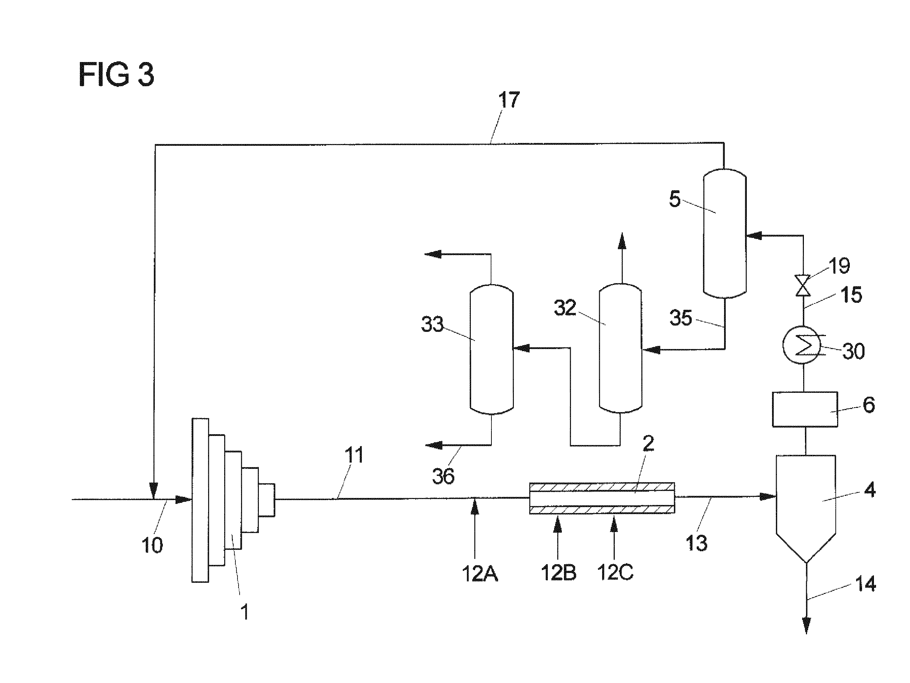

In a further embodiment shown in Fig. 3 the reactor output stream 13 is subjected to a separation unit 4 as in the previously described embodiments. The gaseous product stream of the separation unit 4 is dewaxed in a dewaxing unit 6, cooled down (typically 25 °C). Then the pressure is reduced (e.g. by a valve unit 19) to a subcritical pressure (i.e. below 50 bar) before it is fed into a gas purification unit 5 comprising a flash vessel (or a distillation column) in which the subcritical ethylene is flashed off.

The flashing off can take place in a first distillation column 5 (operating e.g. at 35 bar with a feed temperature of 25°C), into which the reactor output stream 13 is fed.

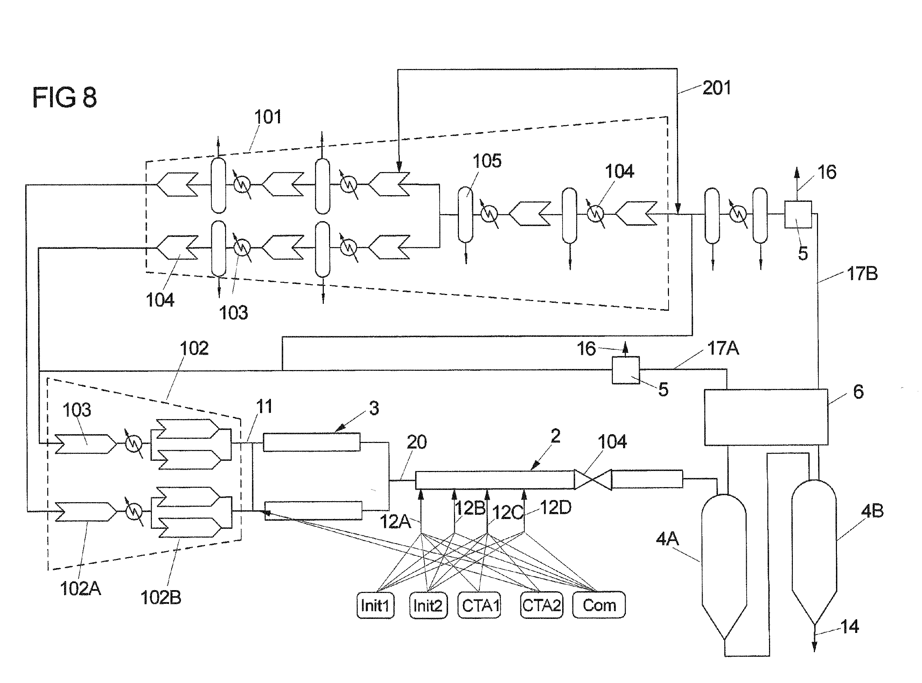

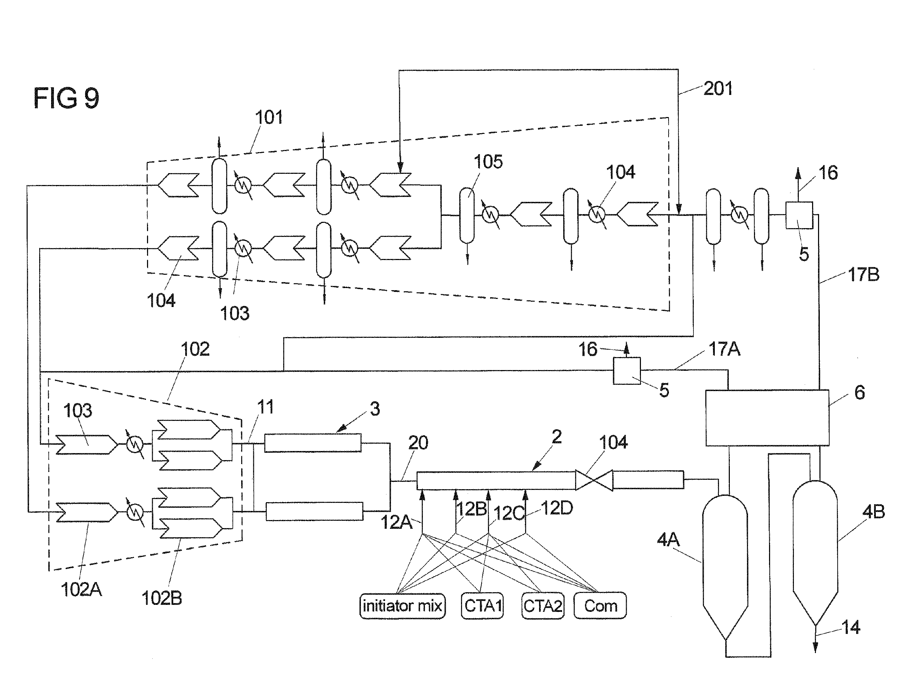

In the shown embodiment the purified gaseous ethylene rich stream 17 is then recycled to the compressor unit 1. If the compressor unit 1 comprises two or more compressor stages (see e.g. Fig. 8 or 9), the recycle stream 17 is introduced into the primary compressor unit 101, i.e. the compressor operation at a lower pressure than the hyper compressor unit 102.

The bottom product 35 of the of the flash vessel 5 (or the distillation column) is further processed, by reducing the pressure from e.g. 35 bar to e.g. 10 to 15 bar in an expansion tank vessel 32, further flashing off ethylene. The remaining product can then further processed in a second distillation column 33 to remove CTA and / or co-monomers in the bottom product 36 of the second distillation column 33.

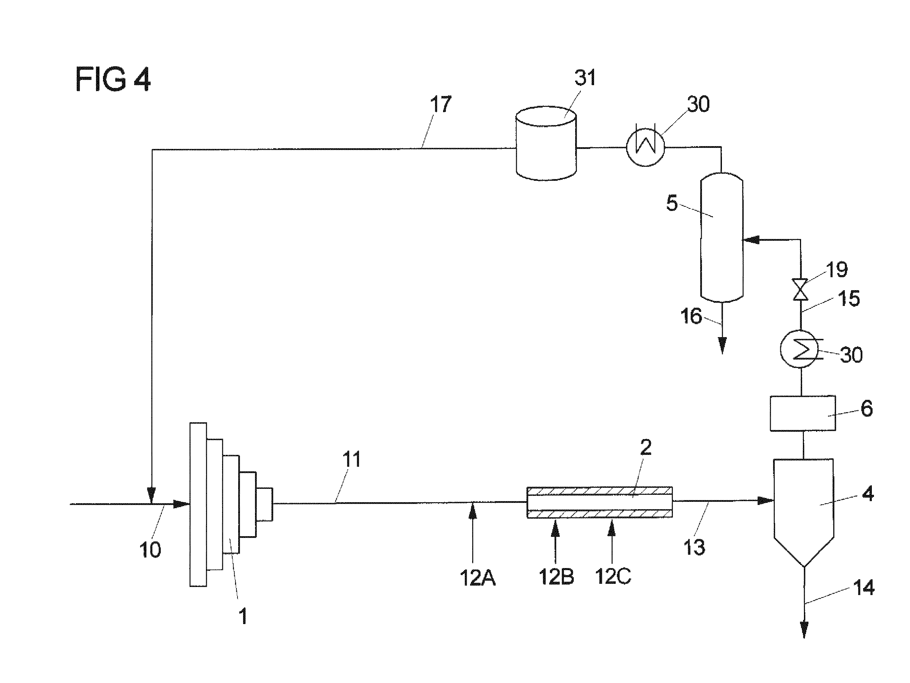

In a further embodiment shown in Fig. 4, which a variation of the embodiment shown in Fig. 3, the purified ethylene is removed from the top of flash vessel 5 (or the distillation column) and cooled in a heat exchanger 30 (e.g. to minus 15°C) and an appropriate pressure (e.g. 27-30 bar) to liquefy the ethylene so it can be stored in a tank 31. The tank 31 can operate as intermediate storage for the liquid ethylene, which then can be introduced into the compressor unit 1 (as shown in Fig. 4), after being transferred into the gaseous phase or which can be introduced into an intensifier in the liquid state. Having intermediate ethylene storage can be beneficial in the operation of the process since the process is less sensitive to fluctuations due to the delivery of ethylene via a pipeline.

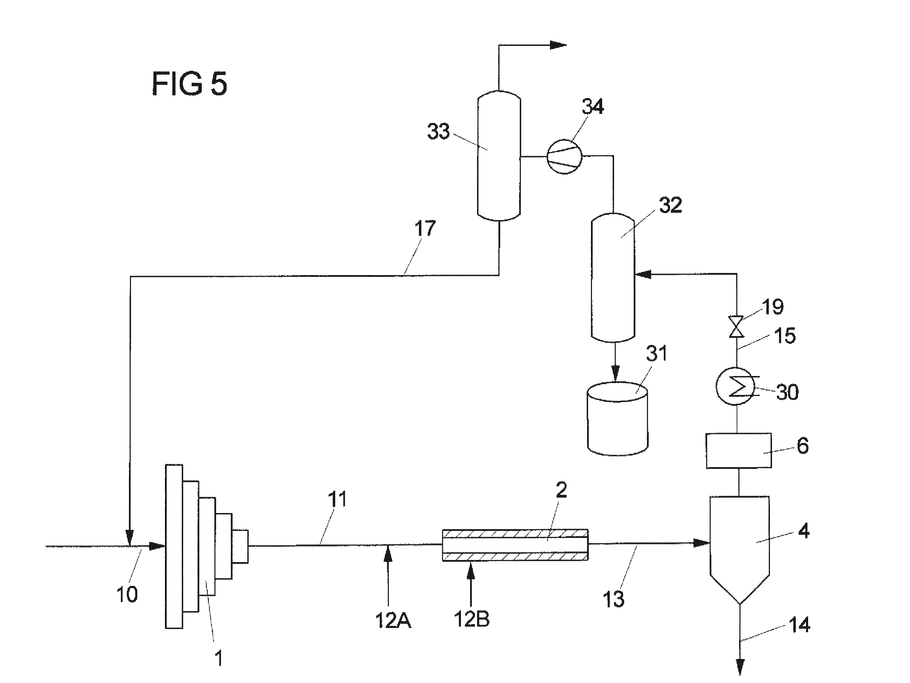

The bottom product of the gas purification 5 is processed as shown in Fig. 3 to separate the CTA and / or co-monomers or for energy recovering as will be shown in the embodiment of Fig. 5.

The embodiment shown in Fig. 5 is a further variation of the second embodiment. The ethylene rich gas separation unit output stream leaving the separation unit 4 is passing through a dewaxing unit 6 and is cooled down to e.g. 10 °C by a heat exchanger 30. The pressure is released into the gas expansion vessel 32 serving as gas purification unit.

The gaseous stream is brought to a sufficiently high pressure (below 50 bar) by a compressor 34; i.e. the stream will be liquid. This liquid stream is then be subjected to a distillation process as gas purification to purify the ethylene from especially gaseous co-monomer and/or chain transfer agents, typically propylene. This is done in gas purification unit 33. The stream is then recycled to the compressor 1.

The high molecular weight stream from 31 is collected in tank 31. These components can be further processed for recovery or used for energy generation.

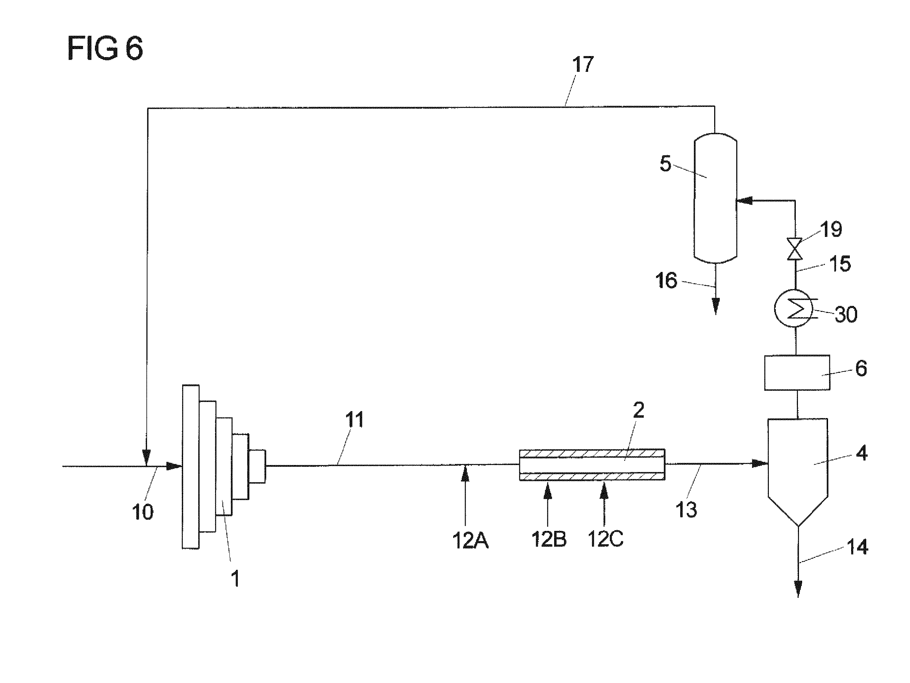

In Fig. 6 a variation of the first embodiment is described, so reference to the relevant description can be made. After the separation unit 4, the gaseous product is subjected to a dewaxing unit 6, a cooler 30 and a pressure relief 19 before the gas purification unit 5.

In addition to the two liquid reactive feed streams 12A, 12B a third liquid reactive feed stream 12C is pumped into the reactor 2. For a person skilled in the art it is clear that even more liquid reactive feed streams 12 can be pumped into the reactor 2 allowing for complex arrangements of reaction zones. A reaction zone can be defined as the space downstream from an introduction point.

This flow sheet can also be used with the embodiments for the gas purification unit 5 shown in Fig. 2, to 5.

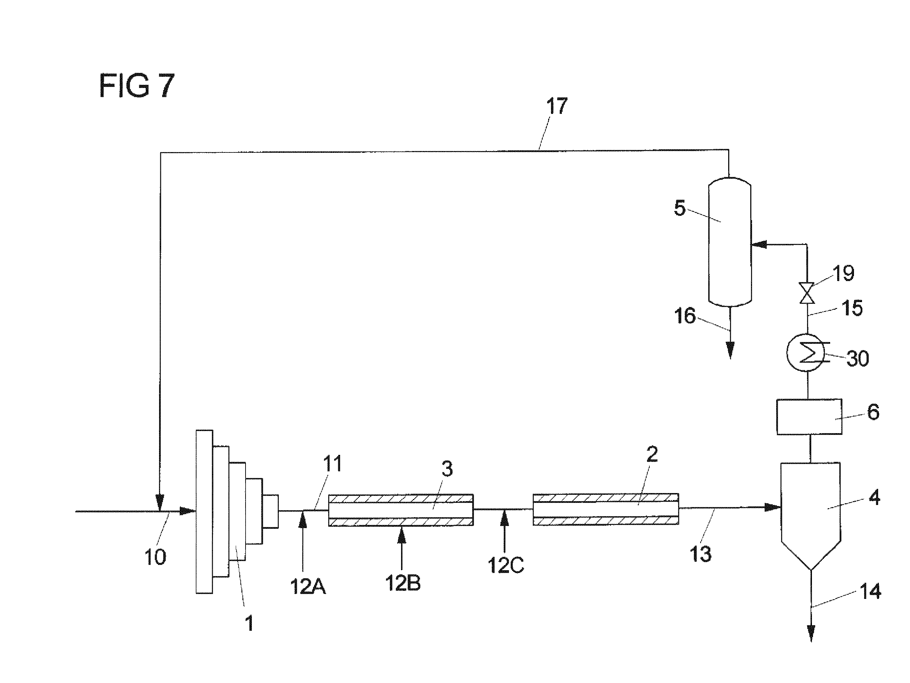

In Fig. 7 a further variation of the embodiment of Fig. 1 or 6 is described. Again, the flow sheet is based to the one of the previous figures so that reference can be made to the relevant description.

Here the pressurized ethylene feed, the compressor unit 1 output stream 11 is fed into a preheater unit 3. The temperature of the compressor unit 1 output stream 11 is here approximately 100°C. The preheater unit 3 increases the temperature of the reactor 2 feed stream to 165 to 200 °C. This temperature is sufficient for starting the free radical polymerization reaction in the reactor 2. As will be shown below, the preheater unit 3 can comprise a number of apparatus.

In this embodiment three reactive feed stream 12A, 12B, 12C are pumped into the process. The first reactive feed stream 12A is pumped into the process downstream from the compressor unit 1 and upstream from the preheater unit 3. The second reactive liquid feed stream 12B is pumped into the preheater unit 3. The third liquid reactive feed stream 12C is pumped into reactor feed stream. In other alternatives additional introduction points for the reactor feed streams are chosen, e.g. along the reactor 2. From the previous embodiments it should be clear that any introduction arrangement for the liquid reactive feed streams 12A, 12B and 12C is possible, as long as it is downstream from the compressor unit 3 and upstream from the separation unit 4. One or more liquid reactive feed streams 12A, 12B, 12C can be pumped into the preheater unit 3 and / or the reactor 2 and / or the feed lines of the preheater unit 3 and / or the reactor 2.

In Fig. 8 a further embodiment is shown, thereby showing the compressor unit 1 in more detail. In principle the process is a variation of the above described embodiments.

Here the compressor unit 1 comprises a primary compressor unit 101 and a hyper compressor unit 102. Each of those compressor units 101, 102 comprises a number of individual compressors 103, e.g. piston compressors.

The primary compressor unit 101 compresses fresh ethylene feed to a pressure between 200 and 300 bar, in particular 240 to 260 bar. The primary compressor unit 101 further comprises five compressor 103 stages, the first stage having two compressors 103 in parallel. After each compression stage, the feed is cooled by coolers 104. Furthermore, a purge stream 105 is used to prevent the build-up of non-reactive substances like nitrogen, water, propane and the like. The ethylene feed 201 can be fed to the primary compressor unit 101 and / or an intermediate compressor stage of the primary compressor unit 101.

The pressurized ethylene is fed into the hyper compressor unit 102, which operates in two stages 102A, 102B, each stage comprising a number of compressors 103 in parallel. After the first stage 102A, the feed is pressurized to 1000 to 1400 bar, in particular 1100 to 1300 bar. Since the pressurization increases the temperature, the ethylene is cooled down before it is further pressurized by the second stage 102B of the hyper compressor unit 102 to pressures up to 3500 bar, in particular to 2000 to 3200 bar.

The output stream of the hyper compressor unit 102 corresponds to the compressor unit 1 output stream 11 in the first to fourth embodiments. The compressor unit 1 in those embodiments can comprise one or more features of the primary and hyper compressor units 101, 102 described above.

The output stream of the hyper compressor unit 102 is fed into a preheater unit 3 which comprises two parallel heating subunits. Here the pressurized ethylene is heated from approximately 100 °C to 165 to 180°C, in particular 170 °C. The output stream of the preheater unit 3 is the feed stream of the reactor 2.

The reaction conditions of the reactor 2 have been described in the context of the previous embodiments so reference is made thereto.

In the embodiment shown in Fig. 8, the tubular reactor 2 has four reactions zones. Each of those reactions zones begins with the introduction of one of the four reactive feed streams 12A, 12B, 12C, 12D. Each of those four liquid reactive feed streams 12A, 12B, 12C, 12D can comprise of chain transfer agents (CTA) and / or co-monomers. Furthermore, the liquid reactive feed streams 12A, 12B, 12C, 12D can comprise an initiator or initiator mixes. Typical initiators are peroxides and oxygen.

The introduction of co-monomers along the reactor 2 improves the randomness of highly reactive co-monomers like e.g. acrylates. Introduction of chain transfer agents along the reactor 2 allows for a more exact control of the molecular weight distribution

At the end of the tubular reactor 2 the pressure is reduced by a high-pressure let-down valve 104 to approximately the same pressure as at the entry of the hyper compressor unit 102, i.e. to 100 and 300 bar, in particular to 240 to 260 bar. The temperature at the exit of the tubular reactor 2 is about 220 to 270 °C, in particular 240 to 260 °C.

The reaction mixture comprises polymer melt together with a number of more volatile compounds, like co-monomers and chain transfer agents.

The polymer product is separated by a separation unit 4 which comprises two stages in the shown embodiment, a high-pressure separation unit 4A and a low-pressure separation unit 4B. In the first separation stage the conditions after the high-pressure let-down valve 104 prevail.

The gaseous product stream of the high-pressure separator 4A is fed into the dewaxing unit 6 and then into the gas purification unit 5; the less volatile product stream is fed into the low-pressure separator 4B. There the pressure is further reduced to about 0, 5 bar abs. The non-volatile product is the polymer output stream 14. The volatile product stream is fed into the gas purification unit 5 via the dewaxing unit 6.

The gas purification unit 5 removes co-monomers and/or chain transfer agents in which exit the process as an ethylene poor output stream 16.

The ethylene rich output streams 17A, 17B are recycled. The gas purification unit 5 (described below) provides two recycle streams 17A, 17B at different pressure levels. The high-pressure recycle 17A at 50 to 300 bar, in particular 240 to 260 bar is mixed with the output of the primary compressor unit 102.

The low-pressure recycle stream 17B is mixed with the fresh ethylene feed 201.

In both cases the pressure level of the recycle streams 17A, 17B can be adjusted to allow smooth operation.

One embodiment of the gas purification unit 5 comprises a high-pressure section and a low-pressure section.

Definition of gas purification is a unit that can purify at least one non-wax substance from the ethylene stream. Ethylene is a gas, thus the name gas purification.

The high-pressure section of the gas purification unit 5 separates ethylene from other components (e.g. co-monomers like VTMS, octadiene, etc.) at supercritical conditions (i.e. above 50 bar and above 10 °C). The separation can be achieved by cooling traps or gravity fractionators. The supercritical ethylene might prior introduction to the gas purification step is purified from waxes in traditional dewaxing units.

The low-pressure section of the gas purification unit 5 uses a distillation system to remove unwanted components from the ethylene under non-supercritical conditions (i.e. below 50 bar or below 10°C). The distillation system might comprise more than one distillation column or separator to purify the low-pressure ethylene. For example a distillation column might perform the first separation, the light product being the ethylene. The bottom product could be subjected to a flash process to remove remaining ethylene from e.g. CTA or other process chemicals. The heavy fraction might be subject to further purification for separating e.g. chain-transfer agents, co-monomers and process chemicals.

This kind of gas purification units 5 can be used with all embodiments described.

Wax is mostly low molecular weight polyethylene. In principle everything that is able to condensate in a dewaxing unit.

The dewaxing unit 6 comprises a series of wax removers in which the ethylene is successively cooled down prior passing the actual wax remover, also being a part of the dewaxing unit 6. In the embodiment shown the high pressure recycle stream 17A comprises five wax removers of which the two later are run in parallel to allow cleaning while the plant operating. The high recycle stream inlet temperature to the first cooler is 240°C and reduced by the cooler to 195°C when entering the first wax remover, after the second cooler the temperature is 130°C and the third wax remover is operating at a gas temperature of 60°C. The wax remover itself is separating the waxes from the ethylene by the baffles that separate the condensed waxes and collecting them at the bottom at which the wax is pumped to a collection tank.

This kind of dewaxing unit 6 can be used with all embodiments described.

The recycled ethylene is then used - as described above - by the hyper compressor unit 102.

From the description of the ninth embodiment it is clear that individual process steps, like the primary and hyper compressor units 101, 102, the reactor 2 with reaction zones, the separation stages 4A, 4B and / or the recycle structure 17A, 17B can be combined with one of the embodiments described above.

Fig. 9 shows an alternative process embodiment which is similar to the ninth embodiment so that the respective description applies.

The one difference is that high and low temperature initiators, e.g. peroxides, are fed into different zones of the reactor 2.

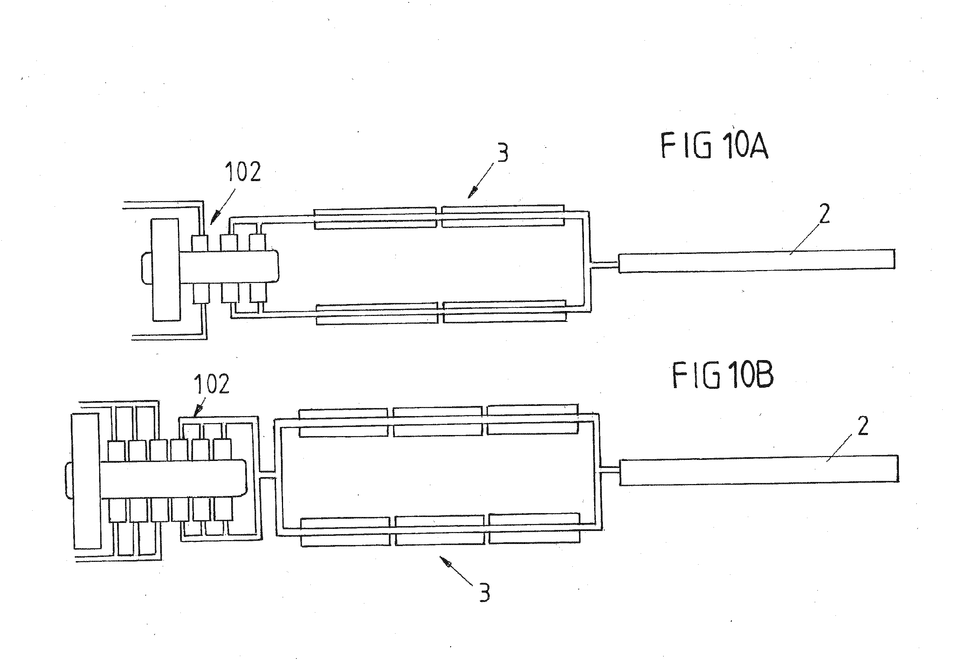

In Fig. 10 an arrangement for a preheater unit 3 is shown. The preheater unit 3 takes its feed from the compressor units 1, in this case hyper compressor units 102. In Fig. 10 a configuration is shown, compressing 30 t/h at 2800 bar. The compressed ethylene feed is then introduced into the preheater units 3 in which the temperature of the ethylene is increased. The heat exchange takes place over pipes comprising steam jackets. In the configuration shown in Fig. 10 steam is used to bring the ethylene to a temperature between 165 and 180 °C. Therefore, this configuration comprises two steam heating units.

The preheater unit comprises tubes with a diameter of 39 mm and a length of 120 m. The heating is made with steam at 12 bar in countercurrent mode.

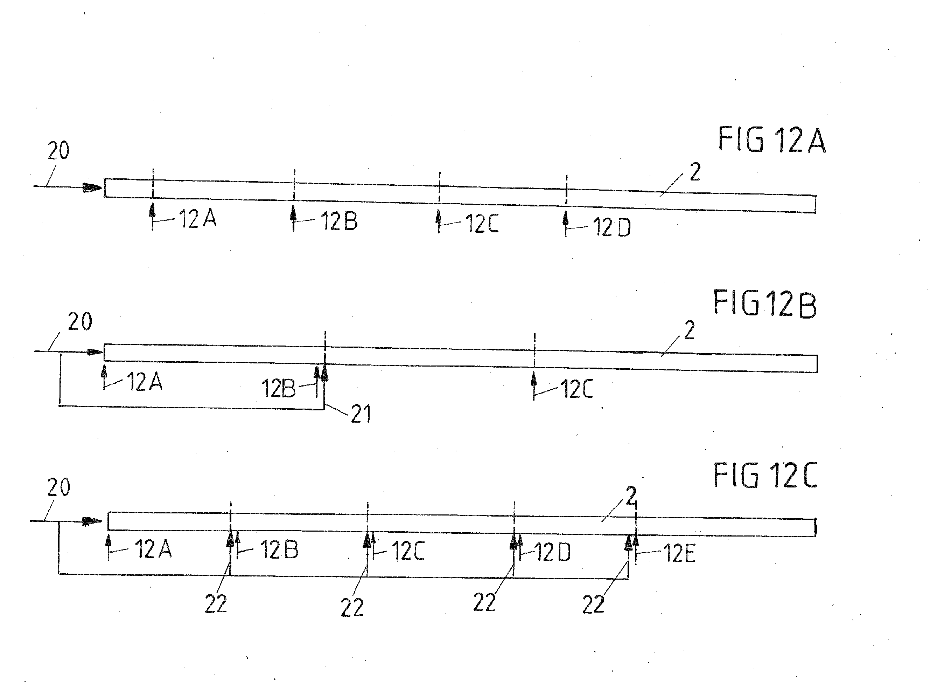

There are 2 separate streams through the compressor and preheater. It means that if the feed into the 2 separate streams are different will the 2 preheater have different compositions usually called side A and Side B. This is shown in figure 12.

It is beneficial to add reactive compounds such as chain transfer agents and / or co-monomers downstream from the compressor unit 1, preferably downstream from the preheater unit 3, i.e. into the reactor 2 as shown e.g. in Fig. 8 or 9.

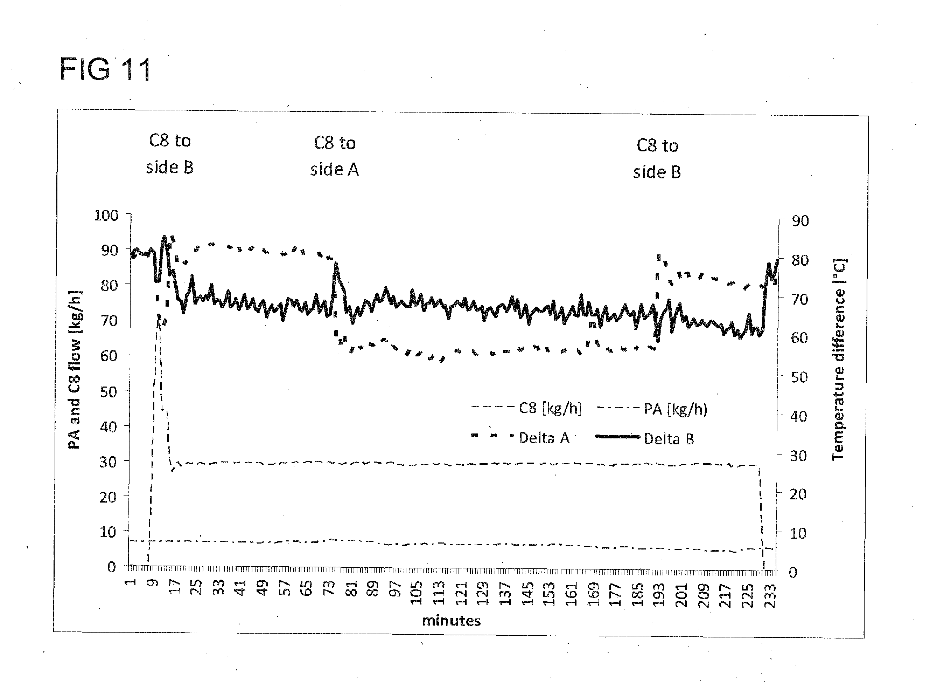

In Fig. 11 the effects of fouling behavior is observed as temperature difference (delta temperature) over the preheater unit 3. Here the preheater unit 3 comprises a side A and side B, i.e. parallel tubes as shown in Fig. 10.

In Fig. 11 at three times octadiene (C8) is introduced into either side A or side B, indicated by arrows at the top of Fig. 11. Propionaldehyde (PA) is added only to side A.

At 9 minutes is octadiene added to side B. The temperature difference (see right axis in Fig. 11) over side B is dropping by 15 °C and will then slowly decrease.

At 75 minutes octadiene feed is changed to side A. The drop in delta temperature on side A is 30 °C. This is due to that octadiene and propionaldehyde (PA) together increase preheater fouling.

At 193 minutes is the octadiene changed to side B. The preheater fouling on side A is reduced. The delta temperature of side A is 10 °C lower than before any octadiene was introduced on side A.

At 227 minutes is the octadiene feed stopped. Immediately the fouling is reduced. After 10 minutes both sides reach normal temperatures.

The addition of reactive substances prior sensitive process steps like e.g. compressor and preheaters might result in unwanted reactions like generation of preheater fouling and influence the lubrication of the compressor(s) units. Therefore, problems in the compressor unit 1, which is mechanically very complex, are prevented if the liquid reactive feed streams 12A, 12B, 12C, 12D are pumped into the process downstream from the compressor unit 1. In the same way preheater fouling is avoided if critical substances are added after the preheater. In the embodiments described so far, the feed stream 20 to the tubular reactor 2 was shown as one front end feed stream, like shown schematically in Fig. 12A. The liquid reactive feed streams 12A, 12B, 12C, 12D and their respective reactor zones are shown.

This structure results in a relatively simple flow sheet, but has a limited flexibility, since ethylene and other reactive components are only introduced in one location.

Therefore different feed stream arrangements, which can be used with the already described embodiments, can have advantages.

In Fig 12B a so-called split-feed arrangement is shown. Here one part of the feed stream 20 is split off as a second feed stream 21. The second feed stream is introduced into the reactor 2 as well as the second liquid reactive feed stream 12B. By adjusting the split-ratio of the feed streams 20, 21 the process allows for more flexibility.

The introduction location of the second liquid reactive feed stream 12B can be chosen freely, i.e. it does not have to be together with the split off part of the feed stream 20.

In one embodiment the liquid reactive feed stream 12A, 12B (comprising CTA and / or co-monomers) is at least partly pumped into the process directly after the final compressor unit 1 so it is added together with ethylene into the multi feed introduction points.

The multi feed configuration shown in Fig. 12C allows even more flexibility. Here four spilt-streams 22 are split off from the reactor feed stream. These split-streams 22 are introduced into the reactor 2 together with the liquid reactive feed streams 12B, 12C, 12D, 12E. Therefore the CTA and co-monomers can be introduced into the reactor 2 at the multi feed injection points.

Above various embodiments of the process and a plant are described. In the following, some embodiments of the plant are described. Those embodiments can be used alone or in connection with each other.

In one embodiment the gas purification unit 5 for the separation of chain transfer agents and / or co-monomers downstream from a gaseous stream 15 downstream from the reactor in operating at least in part at the pressure outlet stream 13 of the reactor 2.

Furthermore, in one embodiment the compressor unit output stream 11 is the input stream of a preheater 3, the preheater 3 being upstream from the reactor 2.

In another embodiment the compressor unit output stream 11, the input stream of a preheater 3 unit, the preheater 3 unit, the output stream 13 of the preheater unit 3 and / or the reactor 2 comprise the at least one inlet for the reactive stream feed 12A, 12B, 12C, 12D, 12E.

It is furthermore possible, to have embodiments in which the reactor 2 comprises at least one tube reactor, in particular at least one tube reactor 2 is a split-feed tube reactor, a front-feed tube reactor or a multi-feed tube reactor.

In another embodiment the ethylene rich product stream 17 of the gas purification unit 5 is combined with the compressor unit feed stream 10.

And in one embodiment the compressor unit 1 is a multistage compressor increasing the pressure of the reactants for the reactor 2 in more than one step.

Examples

Example 1:

The kinetic viscosity was measured according to DIN 51562 with the Ubbelohde viscosity measurement for different commercial lubricants suitable for lubrication for high pressure polyethylene compressors was investigated at 40 °C with and without addition of VTMS.

Table 1:

| Lubricant | VTMS concentration, w-% | | | |
|---|---|---|---|---|
| | 0 | 1,0 | 3,5 | |
| Total Orites 270DS 275 | 275 | 254 | 210 | $mm^2/s$ |
| Shell Corena E220 | 233 | 203 | 151 | $mm^2/s$ |
| Sonneborn CL1200EU | 243 | 210 | 164 | $mm^2/s$ |

It is obvious that VTMS has a surprisingly large effect of the viscosity already at the limited VTMS concentrations typical for ethylene-silane co-polymerisations. Conclusion is VTMS is decreasing the viscosity for all oil. It means that ordinary lubrication is less efficient then VTMS is present, leading to increased wear, which reduces operational time.

Example 2:

In the following table the detrimental effect on compressor units 1 is shown when a comonomer is present in the feed stream. Since compressor units 1 are mechanically very complex, they are sensitive to changes in process conditions. One parameter indicating mechanical problems is the use of lubricants in the hyper compressor. The following table shows that the use of lubricants for making homo polyethylene when a 3.5 wt% of VTMS is present in the feed will the compressor start to vibrate and within 1 to 2 hours will the vibrations be so strong that the compressor needs to be shutdown in order to prevent failure or damage of the compressor.

Table 2:

| Location in compressor | Lubricant use without VTMS |
|---|---|
| Primary compressor unit 101, first lubricant feed | 32 l/day |
| Primary compressor unit 101, second lubricant feed | 32 l/day |
| Primary compressor unit 101, third lubricant feed | 32 l/day |
| Hyper compressor unit 102, first lubricant feed | 28 l/day |

(continued)

| Location in compressor | Lubricant use without VTMS |
|---|---|
| Hyper compressor unit 102, second lubricant feed | 28 l/day |
| Hyper compressor unit 102, third lubricant feed | 28 l/day |

The vibrations can be caused by various means. It can be caused by silane deposits found in the compressor unit 1 after the use of VTMS in the feed of the compressor units. Or it can also be that the lubrication is insufficient when VTMS is present due to the kinetic viscosity effect shown in example 1.

The primary compressor unit 101 is a piston compressor with a piston diameter of 120 mm. It performs 186 rpm, the stroke length is 362 mm, resulting in an average speed of 2,26 m/s.

The hyper compressor unit 102 is a piston compressor with a piston diameter of 75 mm. It performs 187 rpm, the stroke length is 330 mm, resulting in an average speed of 2,06 m/s.

The oil was Shell Corena E220.

Embodiments of the invention can be used so that concentration of VTMS is reduced as much as possible through the compressors unit 1. This means that the concentration of VTMS in practice can be reduced from typically 3,5 wt% down to 1 wt% by adding the VTMS after the compressors unit 1. Example 1 show that VTMS concentration has strong influence on kinetic viscosity, and this enable continuous operation of compressors. By adding a gas purification step 5 for separating VTMS from the recycle stream would further improve an embodiment of the invention. The separation step would increase invenstment, energy consumption and operational cost.

Example 3

In the following a comparative example in way of a conventional process and an example of the present process are described.

_Comparative example_

The reactor used in this case is a continuously 50 ml stirred tank reactor (CSTR) equipped with a jacket heating foil that can heat the reactor to at least 240°C. The ethylene is pressurised by a primary compressor up to 200 bar. In the transfer line between a primary compressor and a secondary compressor the comonomer and the chain-transfer agent are added by separate plunger pumps. The mixture is then pressurised to 2000 bar by the second compressor. The initator (35 wt% Di-tert. butyl peroxide in heptane solution, Trigonox B) is added to the transfer between the secondary compressor and right before the polymerisation reactor. The polymer that is formed in the reactor can be collected in separate bottles at the reactor end. This allows collection of polymers produced under very specific conditions.

Experiments using the reactor of the comparative example illustrates that octadiene deactivates the peroxide. When adding a mixed pressurized feed of ethylene and 1,7-octadiene to the reactor the copolymer output was lowered by ca. 19 % despite an increased initiator feed.

Table 1: polymerization data with/without 1,7-octadiene (97% supplied by Evonik) added prior primary compressor

| Temperature (°C) | Ethylene (g/h) | Propion aldeyde (wt%) | 1,7-octadiene (wt%) | Initiator feed (mmol/h) | Yield (% vs ethylene feed) | Vinyl (/1000 C) |
|---|---|---|---|---|---|---|
| 235 | 1000 | 0,1 | 0 | 0.0057 | 11,0 | 0.06 |
| 220 | 1000 | 0,04 | 0.4 | 0.0079 | 9,0 | 0.48 |

_Example according to the invention_

The reactor used in this case is a continuously 160 ml stirred tank reactor (CSTR) equipped with a jacket heating foil that can heat the reactor to 150°C. The ethylene is pressurised by a primary compressor up to 250 bar and in the secondary compressor up to 2000 bar. In this reactor the comonomer and the chain transfer agent are added <u>after</u> the secondary compressor to the transfer line before the reactor. Separate plunger pumps were used.

The initiator mixture (t- butyl peroxypivalate, Luperox11M75, 2, 1g/dm$^3$, t- butyl peroxyacetate Luperox 7M50, 4, 5 g/dm$^3$ and t- butyl peroxy- 2- ethylhexanoate, Luperox 26, 5, 5 g/l diluted in heptane 680g/dm$^3$) was injected into the top and middle section of the reactor.

The polymer that is formed in the reactor can be collected in separate bottles at the reactor end. This allows collection of polymers produced under very specific conditions.

The 1,7-octadiene feed was increased from 0.4 wt% to 0.8 wt% while keeping all other reactor parameters fixed i.e. the same amount of peroxide is used. As seen in Table 2 the output increased significantly (ca. 22%).

Table 2: Influence of direct injection of octadiene on the total copolymer output

| Temperature (°C) | Ethylene (g/h) | Propion aldeyde (wt%) | 1,7-octadiene (wt%) | Initiator feed (mmol/h) | Yield (% vs ethylene feed) | Vinyl (/1000 C) |
|---|---|---|---|---|---|---|
| 235 | 7854 | 0,15 | 0 | 6.4 | 11.6 | 0.05 |
| 243 | 7832 | 0,05 | 0.4 | 6.1 | 12.3 | 0.52 |
| 244 | 7797 | 0,04 | 0.8 | 6.4 | 14.1 | 0.94 |

The above data of Table 2 show that the direct feed of octadiene allows the radicals generated by the 1,7-octadiene to be used constructively in the propagation reaction rather than terminating peroxide radicals. This favours increased output and an increased content of unsaturated polymer.

Thus, the direct feed of 1, 7- octadiene to the reactor improves the overall output of polymer synthesized.

Analytical methods

Carbon- Carbon Double bond content:

A) Quantification of the amount of carbon-carbon double bonds by IR spectroscopy

Quantitative infrared (IR) spectroscopy was used to quantify the amount of carbon-carbon double bonds (C=C). Calibration was achieved by prior determination of the molar extinction coefficient of the C=C functional groups in representative low molecular weight model compounds of known structure.

The amount of each of these groups (N) was determined as number of carbon- carbon double bonds per thousand total carbon atoms (C=C/ 1000C) via:

$$N = (A \times 14) / (E \times L \times D)$$

where A is the maximum absorbance defined as peak height, E the molar extinction coefficient of the group in question ($l \cdot mol^{-1} \cdot mm^{-1}$), L the film thickness (mm) and D the density of the material ($g \cdot cm^{-1}$).

The total amount of C=C bonds per thousand total carbon atoms can be calculated through summation of N for the individual C=C containing components.

For polyethylene samples solid-state infrared spectra were recorded using a FTIR spectrometer (Perkin Elmer 2000) on compression molded thin (0.5-1.0 mm) films at a resolution of 4 $cm^{-1}$ and analyzed in absorption mode.

1) Polymer compositions comprising polyethylene homopolymers and copolymers, except polyethylene copolymers with > 0.4 wt% polar comonomer

For polyethylenes three types of C=C containing functional groups were quantified, each with a characteristic absorption and each calibrated to a different model compound resulting in individual extinction coefficients:

- vinyl (R- CH=CH$_2$) via 910 cm- 1 based on 1- decene [dec- 1- ene] giving E = 13.13 $l \cdot mol^{-1} \cdot mm^{-1}$
- vinylidene (RR'C=CH2) via 888 $cm^{-1}$ based on 2- methyl- 1- heptene [2- methyhept- 1- ene] giving E = 18.24 $l \cdot mol^{-1} \cdot mm^{-1}$
- trans- vinylene (R- CH=CH- R') via 965 $cm^{-1}$ based on trans- 4- decene [(E)- dec- 4- ene] giving E = 15.14 $l \cdot mol^{-1} \cdot mm^{-1}$

For polyethylene homopolymers or copolymers with < 0.4 wt% of polar comonomer linear baseline correction was applied between approximately 980 and 840 $cm^{-1}$.

2) Polymer compositions comprising polyethylene copolymers with > 0.4 wt% polar comonomer

For polyethylene copolymers with > 0.4 wt% of polar comonomer two types of C=C containing functional groups were quantified, each with a characteristic absorption and each calibrated to a different model compound resulting in individual extinction coefficients:

- vinyl (R- CH=CH2) via 910 cm$^{-1}$ based on 1- decene [dec- 1- ene] giving E = 13.13 l•mol$^{-1}$•mm$^{-1}$
- vinylidene (RR'C=CH2) via 888 cm$^{-1}$ based on 2- methyl- 1- heptene [2- methyl- hept- 1- ene] giving E = 18.24 l•mol$^{-1}$•mm$^{-1}$

EBA:

For poly (ethylene- co- butylacrylate) (EBA) systems linear baseline correction was applied between approximately 920 and 870 cm$^{-1}$.

EMA:

For poly (ethylene- co- methylacrylate) (EMA) systems linear baseline correction was applied between approximately 930 and 870 cm$^{-1}$.

3) Polymer compositions comprising unsaturated low molecular weight molecules For systems containing low molecular weight C=C containing species direct calibration using the molar extinction coefficient of the C=C absorption in the low molecular weight species itself was undertaken.

Example 4 Product transfer time.

Two reactors with 7 ton/hour polyethylene capacity with product receivers of 2 tons are compared for product transfer time. The reactors are producing homo polyethylene with food approval and polyethylene with VTMS (1.9 wt %) or octadiene (0.5 wt %) copolymers without food approval. In order to get food approval must the polymer be free from octadiene or VTMS.

The first reactor is equipped with a gas purification step 5 as shown in figure 5. The transition time from a VTMS containing polymer to a polymer without VTMS (with food approval) is 1.5 * time to empty product receiver which equal 0.5 hours. Time for making polymer without octadiene is equal.

The second reactor is not equipped with a gas purification step 5. The configuration of the reactor is described above as known set-up for a high-pressure polyethylene reactor. Transition time of making polymers is described below. The transition time is defined of being the time when the comonomers are no longer detectable with online FTIR analysis equipment (APLAIRS FTLA 2000).

Table 5: Products

| | MFR2, g/10min | Density, kg/m3 | Octadiene, wt-% | VTMS, wt% |
|---|---|---|---|---|
| LDPE 1 | 0,7 | 923 | 0 | 0 |
| Ethylene/Octadiene | 2,1 | 922,5 | 0,6 | 0 |
| Ethylene/Silane | 1,0 | 922,5 | 0,0 | 1,9 |

Table 6: Product transfer times in hours without gas purification unit.

| | LDPE 1 | LDPE 2 | Ethylene/Octadiene | Ethylene/Silane |
|---|---|---|---|---|
| LDPE1 | X | 1 | 4 | 3 |
| Ethylene/Octadiene | 3 | 3 | X | 8 |
| Ethylene/Silane | >8 | >8 | 8 | X |

For reactor of this site this means that up to 56 ton of polymer can be transition material, with limited economical value. For a current full size plant that makes up to 50 ton/hour and it means transition material of 400 ton.

1    Compressor unit
2    Reactor
3    Preheater unit
4    Separation unit

| 4A | High-pressure separator |
|---|---|
| 4B | Low-pressure separator |
| 5 | Gas purification unit |
| 6 | Dewaxing unit |

| 10 | Compressor unit feed stream |
|---|---|
| 11 | Compressor unit output stream |
| 12 | Liquid reactive feed stream(s) |
| 13 | Reactor output stream |
| 14 | Polymer product stream |
| 15 | Gas separation unit output stream (ethylene rich) |
| 16 | Ethylene poor output stream of the gas purification |
| 17 | Recycle stream |
| 17A | High pressure recycle |
| 17B | Low pressure recycle |
| 18 | Preheater output stream |
| 19 | Valve unit |
| 20 | Reactor feed stream |
| 21 | Split feed stream to the reactor |
| 22 | Multi-feed streams to the reactor |

| 30 | Heat exchanger |
|---|---|
| 31 | Tank |
| 32 | Expansion vessel |
| 33 | Second distillation column |
| 34 | Compressor |
| 35 | Bottom product stream of gas purification unit |
| 36 | Bottom product stream of second distillation column |

| 101 | Primary compressor unit |
|---|---|
| 102 | Hyper compressor unit |
| 102A, B | Compressor stages in hyper compressor unit |
| 103 | Compressor |
| 104 | High pressure let-down valve |
| 105 | Purge stream |

| 201 | Fresh ethylene feed |
|---|---|

**Claims**

1. Process for manufacturing polyethylene and ethylene based copolymers in which

a) a compressor unit feed stream (10), comprising ethylene, is fed into a compressor unit (1) for increasing the pressure for a reactor (2) for radical polymerization of the ethylene,
b) a compressor unit output stream (11) of more than 1 t/h is fed into the reactor (2), and
c) wherein a gas purification unit (5) separates comonomers and / or chain transfer agents from a gaseous stream (15) downstream from the reactor (2).

2. Process according to claim 1, wherein the pressure of the effluent of the reactor (2) is reduced to a subcritical pressure, in particular below 50 bar, before it is fed into the gas purification unit (5) comprising a flash process in which the subcritical ethylene is flashed off.

3. Process according to claim 1, wherein the ethylene rich gas separation unit output stream (15) is cooled down, in particular to temperatures below 10 °C and is brought to a sufficiently high pressure, in particular pressures exceeding 10 bar, so the stream will be liquid and it further processed in a distillation process of the gas purification unit (5).

4. Process according to at least one of the preceding claims, wherein a dewaxing unit (6) positioned up stream from

12

a gas purification unit (6).

5. Process according to at least one of the preceding claims, wherein an ethylene stream downstream from the gas purification unit (5) is stored in an intermediate tank (31).

6. Process according to at least one of the preceding claims, wherein at least one reactive feed stream (12A, 12B, 12C, 12D, 12E) comprising at least one comonomer and / or at least one chain transfer agent is introduced into the process downstream from the compressor unit (1).

7. Process according to at least one of the preceding claims, wherein the compressor unit output stream (11) is the input stream of a preheater (3), the preheater (3) being upstream from the reactor (2).

8. Process according to at least one of the preceding claims, wherein the at least one liquid reactive feed stream (12A, 12B, 12C, 12D, 12E) is introduced into the compressor output stream (11), into the input stream of the preheater (3), into the preheater (3), into the output stream (18) of the preheater (3) and / or into the reactor (2).

9. Process according to at least one of the preceding claims, wherein the at least one liquid reactive feed stream (12A, 12B, 12C, 12D, 12E) comprises an ethylene concentration of less than 50wt-%.

10. Process according to at least one of the preceding claims, wherein the at least one comonomer is selected from the group of octadiene (OD), vinyl acetate (EVA), meth acrylates, in particular methyl acrylate (EMA), ethyl acrylate (EEA), butyl acrylate (EBA), methyl methacrylate (EMMA), acrylic acid (EAA), methacrylic acid (EMAA), vinyl tri methoxy silane (VTMS), vinyl tri ethoxy silane (VTES), glycidyl methacrylate (GMA), maleic anhydride (MAH), carbon monoxide, acrylamide, gamma-metha acryloxy propyl tri methoxy silane and gamma-metha acryloxy propyl tri ethoxy silane.

11. Process according to at least one of the preceding claims, wherein the at least one chain transfer agent is selected from the group of proprionaldehyde, propylene, propane, methyl ethyl ketone isopropanol and hydrogen.

12. Process according to at least one of the preceding claims, wherein at least two liquid reactive feed streams (12A, 12B, 12C, 12D, 12E) have a different composition.

13. Process according to at least one of the preceding claims, wherein the reactor (2) comprises at least one tube reactor.

14. Process according to at least one of the preceding claims, wherein the ethylene rich product stream (17) of the gas purification (5) is combined with the compressor feed stream (10).

15. Process according to at least one of the preceding claims, wherein the reactor (2) is a tubular reactor operating above the critical pressure, in particular between 500 and 3500 bar, specifically between 1800 and 3400, more specifically between 2000 and 3300 bar or the reactor (2) is an autoclave reactor operating above critical pressure, in particular between 500 and 3000 bar, specifically between 1000 and 2500 bar, more specifically between 1200 and 2000 bar.

16. Process according to at least one of the preceding claims, wherein the reactor (2) is a tubular reactor operating at temperatures between 100 and 350 °C, in particular between 165 and 340 °C, more particularly between 165 and 320 °C, the feed temperature of the reactor (2) being in the range of 100 to 200 °C or the reactor (2) is an autoclave reactor operating at temperatures between 100 and 340 °C.

17. Process according to at least one of the preceding claims, wherein at least one split-stream (21, 22) is split-off from the reactor feed stream (20) and pumped into the reactor (2) further downstream, preferably at the same location than at least one of the liquid reactive feed streams (12A, 12B, 12C, 12D, 12E).

18. Plant for manufacturing polyethylene and ethylene based copolymers with

   a) a compressor unit (1) for increasing the pressure of a compressor unit feed stream (10), comprising ethylene and a compressor unit output stream (11) of more than 1 t/h is fed into a reactor (2), and
   b) the reactor (2) being downstream from the compressor unit (1) for radical polymerization of the ethylene and
   c) a gas purification unit (5) for the separation of comonomers and / or chain transfer agents from a gaseous stream (15) downstream from the reactor (2).

FIG 1

FIG 2

FIG 3

EP 2 636 689 A1

FIG 4

EP 2 636 689 A1

FIG 5

FIG 6

EP 2 636 689 A1

FIG 7

EP 2 636 689 A1

FIG 8

FIG 9

101
201
105
104
16
5
104
103
17B
102
16
17A
103
11
3
6
20
2
104
102A
102B
12A 12B 12C 12D
4A
4B
14
initiator mix    CTA1    CTA2    Com

EP 2 636 689 A1

FIG 10A

FIG 10B

# FIG 11

FIG 12A

FIG 12B

FIG 12C

Europäisches
Patentamt

European
Patent Office

Office européen
des brevets

**EUROPEAN SEARCH REPORT**

Application Number

EP 12 15 8417

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/032614 A1 (GOOSSENS IVO T [BE] ET AL) 8 February 2007 (2007-02-08) * paragraphs [0009], [0010], [0013], [0040], [0065], [0073], [0074] * | 1-18 | INV. C08F10/00 C08F2/00 C08F2/01 |
| X | WO 2011/057926 A1 (BOREALIS AG [AT]; NILSSON ULF [SE]; SMEDBERG ANNIKA [SE]; CAMPUS ALFRE) 19 May 2011 (2011-05-19) * page 1, line 6 * * page 15, line 20 * * page 15, lines 23-26 * * page 18, lines 28-29 * * page 19, lines 11-18 * | 4,6,8,9, 12,13, 15-18 | |
| X | WO 2011/076372 A1 (BASELL POLYOLEFINE GMBH [DE]; SCHMIDT CHRISTIAN-ULRICH [DE]; BERHALTER) 30 June 2011 (2011-06-30) * page 1, lines 6-8 * * page 4, lines 10-26 * * page 6, lines 26-27 * * page 6, lines 34-39 * * page 7, lines 4-34 * | 6-8,10, 14-18 | |
| X | EP 0 144 716 A2 (CHEMPLEX CO [US]) 19 June 1985 (1985-06-19) * page 1, lines 5-7 * * page 3, lines 4-9 * * page 8, lines 16-20 * * page 9, line 27 * * page 10, lines 9-28 * * page 11, lines 14-26 * | 4,6,8,9, 13-15,18 | TECHNICAL FIELDS SEARCHED (IPC) C08F B01J |
| X | WO 2007/134670 A1 (EXXONMOBIL CHEM PATENTS INC [US]; CLAESSENS ROGER [BE]; LAMMENS HENRI) 29 November 2007 (2007-11-29) * paragraphs [0001], [0008], [0011], [0015] - [0022], [0026], [0029], [0032], [0033], [0036] - [0038], [0044] - [0045] * | 10,11, 13-18 | |

The present search report has been drawn up for all claims

| Place of search | Date of completion of the search | Examiner |
|---|---|---|
| The Hague | 18 June 2012 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 12 15 8417

This annex lists the patent family members relating to the patent documents cited in the above-mentioned European search report.
The members are as contained in the European Patent Office EDP file on
The European Patent Office is in no way liable for these particulars which are merely given for the purpose of information.

18-06-2012

| Patent document cited in search report | Publication date | Patent family member(s) | Publication date |
|---|---|---|---|
| US 2007032614 A1 | 08-02-2007 | BR PI0614392 A2 | 22-03-2011 |
| | | CA 2617474 A1 | 15-02-2007 |
| | | CN 101253202 A | 27-08-2008 |
| | | EP 1919967 A1 | 14-05-2008 |
| | | KR 20080026207 A | 24-03-2008 |
| | | US 2007032614 A1 | 08-02-2007 |
| | | WO 2007018871 A1 | 15-02-2007 |
| | | ZA 200800777 A | 25-03-2009 |
| WO 2011057926 A1 | 19-05-2011 | NONE | |
| WO 2011076372 A1 | 30-06-2011 | NONE | |
| EP 0144716 A2 | 19-06-1985 | CA 1241800 A1 | 06-09-1988 |
| | | DE 3481991 D1 | 23-05-1990 |
| | | EP 0144716 A2 | 19-06-1985 |
| | | ES 8601248 A1 | 16-02-1986 |
| | | FI 844819 A | 08-06-1985 |
| | | JP 1911432 C | 09-03-1995 |
| | | JP 5004962 B | 21-01-1993 |
| | | JP 60139711 A | 24-07-1985 |
| | | NO 844754 A | 10-06-1985 |
| | | US 4558105 A | 10-12-1985 |
| WO 2007134670 A1 | 29-11-2007 | BR PI0712032 A2 | 20-12-2011 |
| | | CA 2651867 A1 | 29-11-2007 |
| | | CN 101472675 A | 01-07-2009 |
| | | EA 200802250 A1 | 30-06-2009 |
| | | EP 2029268 A1 | 04-03-2009 |
| | | KR 20090017610 A | 18-02-2009 |
| | | TW 200808836 A | 16-02-2008 |
| | | US 2010022736 A1 | 28-01-2010 |
| | | WO 2007134670 A1 | 29-11-2007 |

EPO FORM P0459

For more details about this annex : see Official Journal of the European Patent Office, No. 12/82